Europäisches Patentamt

European Patent Office

Office européen des brevets

(19)

(11) Numéro de publication : **0 336 819 B1**

(12) **FASCICULE DE BREVET EUROPEEN**

(45) Date de publication du fascicule du brevet :
**28.10.92 Bulletin 92/44**

(51) Int. Cl.$^5$ : **B60N 2/36**

(21) Numéro de dépôt : **89400875.4**

(22) Date de dépôt : **29.03.89**

(54) **Banquette repliable et notamment banquette arrière de véhicule automobile.**

(30) Priorité : **07.04.88 FR 8804621**

(43) Date de publication de la demande :
**11.10.89 Bulletin 89/41**

(45) Mention de la délivrance du brevet :
**28.10.92 Bulletin 92/44**

(84) Etats contractants désignés :
**BE DE ES GB IT NL SE**

(56) Documents cités :
**EP-A- 0 161 157
EP-A- 0 197 167
FR-A- 2 407 837
GB-A- 916 746
US-A- 3 185 525
US-A- 4 475 763**

(73) Titulaire : **CESA COMPAGNIE EUROPEENNE
DE SIEGES POUR AUTOMOBILES
20, rue Paul-Vaillant-Couturier
F-92300 Levallois-Perret (FR)**

(72) Inventeur : **Coussemacq, Jean Marc
5 rue de Provence
F-25700-Valentigney (FR)**
Inventeur : **Fourrey, François
34 rue du Petit Chênois
F-25200 Montbeliard (FR)**

(74) Mandataire : **Mestre, Jean et al
c/o CABINET LAVOIX 2, place d'Estienne
d'Orves
F-75441 Paris Cédex 09 (FR)**

## Description

Certains véhicules, et notamment les véhicules munis d'une porte arrière, sont de plus en plus souvent équipés de sièges arrières dont l'assise et le dossier sont articulés indépendamment sur la carrosserie de façon à pouvoir être rabattus dans une position escamotée derrière le siège avant et ainsi à rendre disponible un espace supplémentaire pour le transport de bagages ou de marchandises, cet espace venant la plupart du temps accroître le volume du compartiment à bagages.

D'une manière classique, dans ce cas, l'assise est articulée par son bord avant tandis que le dossier est articulé par son bord inférieur. L'assise peut ainsi être relevée en position verticale contre le dossier du siège avant tandis que le dossier est replié vers l'avant en position horizontale derrière elle. Le supplément de place disponible obtenu est important mais la banquette arrière est totalement supprimée, ce qui limite souvent de manière rédhibitoire le nombre des passagers qui peuvent prendre place dans le véhicule.

Afin d'améliorer la souplesse d'utilisation il est maintenant de plus en plus apprécié de pouvoir partager l'espace arrière de façon à conserver une place pour un passager tout en augmentant le volume disponible pour les bagages. On a donc proposé de munir la banquette arrière de deux dossiers séparés susceptibles tous les deux d'être rabattus et de les équiper chacun de chaque côté de dispositif d'articulations. Une telle disposition est connue par exemple par US-A-3 185 525, correspondant au préambule de la revendication 1.

Cette disposition s'est avérée pratique mais coûteuse.

La présente invention a pour but de remédier à cet inconvénient en fournissant une banquette repliable comportant deux dossiers côte à côte et permettant le rabattement de l'un d'eux sur l'assise, dont la réalisation soit particulièrement simple et par conséquent peu coûteuse.

Cette invention a en effet pour objet une banquette repliable, et notamment une banquette arrière de véhicule automobile, comportant une assise et deux dossiers côte à côte munis chacun de moyens de verrouillage en position redressée d'utilisation, caractérisée en ce que, les deux dossiers sont portés par une même tige qui est susceptible de pivoter autour d'un axe X-X entre une position redressée d'utilisation de la banquette et une position de rabattement des deux dossiers et sur laquelle l'un des dossiers est monté pivotant.

Selon une autre caractéristique de l'invention la banquette comporte des moyens interdisant le déplacement du dossier pivotant sur la tige lorsque celle-ci est en position de rabattement total du dossier.

Grâce à cette disposition, les deux dossiers peuvent être déplacés ensemble autour de l'axe de pivotement de la tige qui les porte pour être rabattus derrière l'assise, ou redressés, tandis que le dossier pivotant peut être déplacé seul autour de l'axe constitué par cette même tige pour être rabattu sur l'assise, l'autre dossier restant alors en position d'utilisation par un passager.

La commande s'effectue très simplement sans organe particulier ni dispositif d'articulation complexe.

La description ci-dessous d'un mode de réalisation, donné a titre d'exemple non limitatif et représenté aux dessins annexés, fera d'ailleurs ressortir les avantages, et caractéristiques de l'invention. Sur ces dessins :

La figure 1 est une vue en perspective éclatée des armatures des deux dossiers d'une banquette selon l'invention.

La figure 2 montre les armatures des deux dossiers en position respectivement d'utilisation et de rabattement sur l'assise.

La figure 3 est une vue en perspective de la banquette dans cette position.

La figure 4 est une vue schématique de côté montrant les sièges d'un véhicule automobile comportant une banquette selon l'invention.

La figure 5 est une vue analogue à la figure. 2 montrant les armatures des deux dossiers en position de rabattement total.

La figure 6 est une vue en perspective d'une banquette arrière repliée.

La figure 7 est une vue schématique de côté des sièges d'un véhicule automobile dans cette position.

La banquette repliable selon l'invention comporte deux dossiers indépendants, placés côte à côte, qui sont de préférence formés par une armature dont l'élément essentiel est constitué par un cadre sensiblement rectangulaire, respectivement 1 et 2. Chacun des cadres 1 et 2 comportent ainsi deux tubes, ou barres, latéraux respectivement 3 et 5, et 4 et 6, opposés, qui sont percés a leur partie inférieure de trous traversants 7,9 et 8,10 en regard. Dans chacun de ces trous est monté un palier 12,14 de support d'une tige horizontale 16 reliée, par une biellette 18 articulée à ses deux extrémités, à un support 20 fixé au plancher du véhicule. La tige 16 est ainsi susceptible de pivoter autour d'un axe X-X matérialisé par son axe 22 d'articulation sur le support 20.

Les barres supérieures 23 et 24 des deux cadres d'armature 1 et 2 sont pratiquement alignées. Par contre les barres latérales 3 et 5 du cadre 1 sont plus courtes que les barres latérales 4 et 6 du cadre 2 de sorte que la barre inférieure 25 du cadre 1 est plus éloignée de l'axe de pivotement X-X que la barre inférieure 26 du cadre 2. Cette dernière est par ailleurs solidaire de l'extrémité recourbée d'une petite tige 28 qui est coaxiale à l'axe X-X et est montée rotative dans un support 30 fixé au plancher du véhicule, autour de cet axe X-X.

Les cadres 1 et 2 sont munis a leur partie supérieure chacun d'un taquet, respectivement 32,34, de verrouillage sur la carrosserie du véhicule, les deux taquets étant portés par les barres verticales éloignées 3 et 6 des deux cadres. En outre, la barre verticale 4 du cadre 2 porte une patte 36 qui s'étend latéralement jusque derrière la barre verticale 5 du cadre 1.

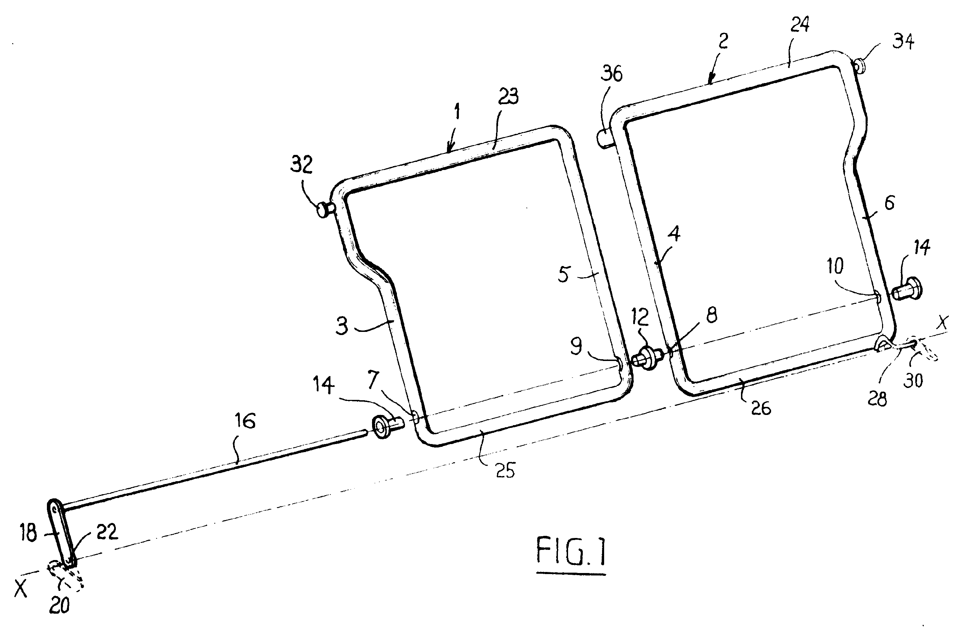

En position normale d'utilisation de la banquette, les deux dossiers, et notamment les cadres 1 et 2, sont portés par la tige 16 qui est en position redressée c'est-à-dire dans la position représentée sur la figure 1, la biellette 18 étant sensiblement verticale. Les taquets 32 et 34 sont verrouillés sur la carrosserie de sorte que les deux dossiers sont immobilisés en position sensiblement verticale.

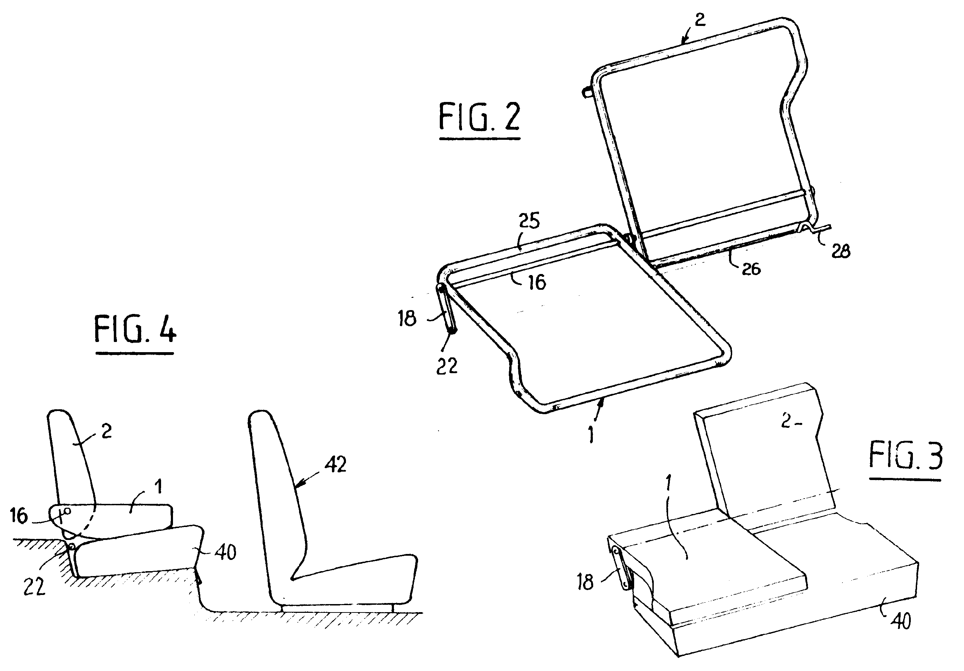

Lorsqu'il est désiré de rabattre l'un des dossiers tout en conservant une partie de la banquette disponible pour un passager, il suffit de déverrouiller le taquet 32 solidaire du cadre 1 et de pousser ce cadre vers l'avant. Comme il est libre de pivoter sur la tige 16, il bascule facilement et se rabat sur l'assise 40. La banquette comporte alors, comme représentée plus particulièrement sur les figures 3 et 4, un dossier 2 qui est redressé en position normale et un dossier 1 rabattu sur l'assise. Cette banquette fournit ainsi une place normale pour un passager, grâce à la combinaison du dossier 2 redressé et de la portion de la banquette 1 qui est restée dégagée. Par contre, à côté de ce siège le rabattement du dossier 1 dégage un espace pratique pour l'empilement de bagages ou de marchandises.

Le redressement du dossier 1 s'effectue de manière aussi simple que son rabattement par pivotement du cadre 1 autour de la tige 16 puis verrouillage du taquet 32 sur la carrosserie.

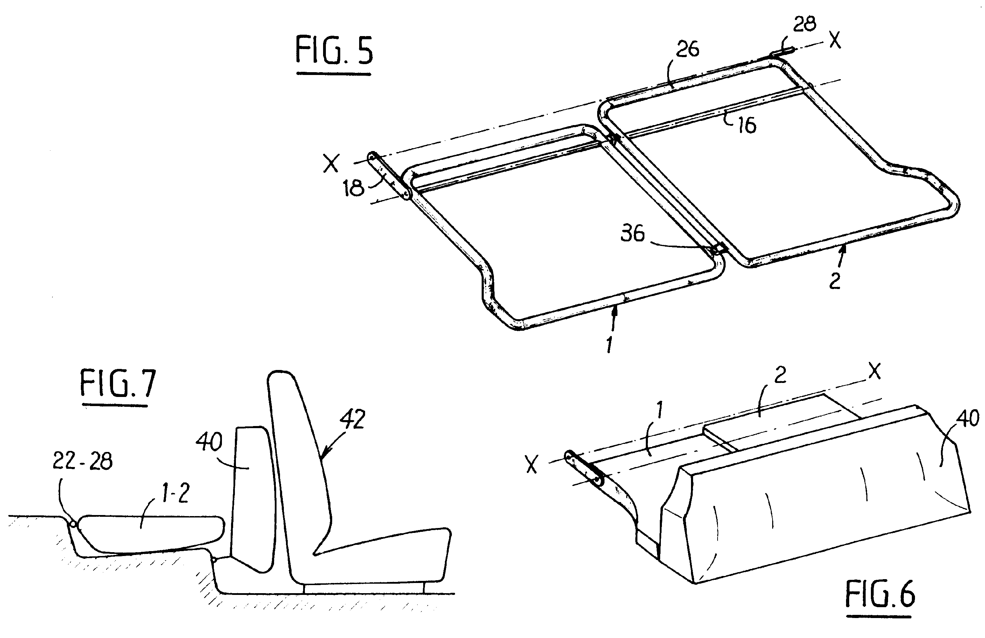

Lorsqu'il n'est pas envisagé de transporter un passager et qu'au contraire l'on désire disposer du maximum de place pour les bagages ou les marchandises, il est bien entendu possible de faire basculer, de la manière habituelle, l'assise 40 sur son bord avant pour la placer en position verticale derrière le siège avant 42 du véhicule, comme le montrent plus particulièrement les figures 6 et 7. L'ensemble du dossier peut alors être rabattu sur le plancher en déverrouillant les taquets 32 et 34 puis en exerçant une poussée sur la partie supérieure du dossier 2 pour provoquer son basculement. Cette poussée est transmise par la patte 36 au dossier 1 de sorte que les deux dossiers pivotent ensemble. La barre inférieure 26 du cadre 2 étant solidaire de la petite tige 28, tourne autour de l'axe X-X de cette dernière de même que l'ensemble des deux dossiers. Par suite, ceux-ci ainsi que la tige 16 et la biellette 18 tournent simultanément autour de l'axe d'articulation 22 de la biellette 18 sur le support 20 et de l'axe de la petite tige 28 c'est-à-dire de l'axe X-X. Ils se déplacent entre la position d'utilisation redressée représentée sur la figure 1 et la position rabattue sur le plancher du véhicule montrée sur les figures 5, 6 et 7. Dans cette position, les dossiers rabattus laissent disponible le maximum de place derrière le siège ayant 42 du véhicule.

Lors du redressement des dossiers, ceux-ci pivotent à nouveau autour de l'axe X-X en entraînant la tige 16 jusqu'au moment où la biellette 18 a retrouvé sa position verticale, ce qui correspond à la position redressée d'utilisation des deux dossiers.

Grâce à cette disposition le dossier 1 peut pivoter soit seul autour de l'axe formé par la tige 16, pour être rabattu sur l'assise, soit simultanément avec le dossier 2 autour de l'axe X-X c'est-à-dire d'un second axe décalé par rapport au premier, pour être rabattu en même temps que ce second dossier sur le plancher du véhicule. La distance entre les deux axes, c'est-à-dire la longueur de la biellette 18, correspond sensiblement à l'épaisseur de l'assise et ces deux axes sont bien entendu rigoureusement parallèles l'un à l'autre.

Ces axes étant matérialisés l'un par une tige pivotante et l'autre simplement par un axe d'articulation et une petite tige rotative, l'ensemble du dispositif est extrêmement simple à réaliser et particulièrement peu coûteux. En outre il est extrêmement fiable car il ne comporte aucun élément complexe susceptible de se dérégler ou d'être détérioré par l'usage.

## Revendications

1. Banquette repliable, et notamment banquette arrière de véhicule automobile, comportant une assise (40) et deux dossiers (1,2) côte à côte, munis chacun de moyens (32,34) de verrouillage en position redressée d'utilisation, caractérisée en ce que les deux dossiers (1-2) sont portés par une même tige horizontale (16) qui est susceptible de pivoter autour d'un axe X-X entre une position redressée d'utilisation de la banquette et une position de rabattement des deux dossiers (1,2) et sur laquelle l'un des dossiers (1) est monté pivotant.

2. Banquette suivant la revendication 1, caractérisée en ce que le dossier pivotant (1) est libre de pivoter sur la tige horizontale (16) placée en position redressée, en vue de son rabattement sur l'assise, des moyens (36) de solidarisation empêchant son pivotement sur ladite tige en position rabattue.

3. Banquette suivant l'une des revendications 1 et 2, caractérisée en ce que chacun des dossiers comporte un cadre rectangulaire d'armature (1-2) dont les deux côtés opposés (3-5, 4-6) sont traversés successivement par la tige horizontale pivotante (16).

4. Banquette suivant la revendication 3, caractérisée en ce que la barre inférieure (26) du second dossier (2) est solidaire d'un organe (petite tige 28) rotatif autour de l'axe X-X de pivotement de la tige horizontale (16).

5. Banquette suivant l'une des revendications précédentes, caractérisée en ce que la tige horizontale (16) est reliée par une biellette articulée (18) à un support fixe (20).

6. Banquette suivant l'une des revendications précédentes, caractérisée en ce qu'elle comporte des moyens (36) de solidarisation de deux dossiers (1 et 2) pendant leur pivotement autour de l'axe X-X de pivotement de la tige (16).

7. Banquette suivant la revendication 6, caractérisée en ce que les moyens (36) de solidarisation des deux dossiers sont constitués par une patte (36) venant en appui sur le dossier pivotant (1) et fixée sur l'un des côtés du second dossier (2).

8. Banquette suivant l'une des revendications précédentes, caractérisée en ce qu elle comporte une assise (40) rabattable verticalement autour de son bord avant et un premier dossier (1) rabattable seul sur l'assise (40) en position d'utilisation, et rabattable simultanément avec un second dossier (2) sur le plancher, derrière l'assise (40) en position verticale.

**Patentansprüche**

1. Ein umklappbarer Sitz, insbesondere ein Rücksitz für ein Kraftfahrzeug, der eine Sitzfläche (10) und zwei Seite an Seite angeordnete Rückenlehnen (1, 2) aufweist, die jeweils mit Mitteln (32, 34) für die Verriegelung in hochgestellter Einsatzstellung ausgerüstet sind, **dadurch gekennzeichnet, daß** die beiden Rückenlehnen (1, 2) von einer gemeinsamen horizontalen Welle (16) getragen werden, die zwischen einer hochgestellten Einsatzstellung der Sitzbank und einer heruntergeklappten Stellung der beiden Rückenlehnen (1, 2) um eine Achse X-X geschwenkt werden kann und auf der eine der Rückenlehnen (1) schwenkbar montiert ist.

2. Ein Sitz nach Anspruch 1, **dadurch gekennzeichnet, daß** die schwenkbare Rückenlehne (2) frei um die horizontale Welle (16) in hochgeklappter Stellung geschwenkt werden kann, um auf die Sitzfläche heruntergeklappt zu werden, wobei Feststellmittel (36) ein Schwenken auf der Welle in heruntergeklappter Stellung verhindern.

3. Ein Sitz nach einem der Ansprüche 1 und 2, **dadurch gekennzeichnet, daß** jede der Rückenlehnen einen rechteckigen Stützrahmen (1, 2) aufweist, dessen gegenüberliegende Seiten (3,5; 4, 6) nacheinander von der schwenkbaren horizontalen Welle (16) durchquert werden.

4. Ein Sitz nach Anspruch 3, **dadurch gekennzeichnet, daß** die untere Stange (26) der zweiten Rückenlehne (2) fest mit einer kleinen Anlenkstange (28) verbunden ist, die sich um die Schwenkachse X-X der horizontalen Welle (16) drehen kann.

5. Ein Sitz nach einem der vorausgegangenen Ansprüche, **dadurch gekennzeichnet, daß** die horizontale Welle (16) über eine Anlenkstange (18) mit einem festen Sockel (20) verbunden ist.

6. Ein Sitz nach einem der vorausgegangenen Ansprüche, **dadurch gekennzeichnet, daß** er Mittel (36) für die Feststellung der beiden Rückentehnen (1, 2) während ihrer Schwenkung um die Schwenkachse X-X der Welle (16) aufweist.

7. Ein Sitz nach Anspruch 6, **dadurch gekennzeichnet, daß** die Mittel (36) für die Feststellung der beiden Rückenlehnen aus einer Klaue (36) bestehen, die sich an der schwenkbaren Rückenlehne (1) abstützt und an einer der Seiten der zweiten Rückenlehne (2) befestigt ist.

8. Ein Sitz nach einem der vorausgegangenen Ansprüche, **dadurch gekennzeichnet, daß** er eine vertikal um ihre Vorderkante umklappbare Sitzfläche (40) und eine erste Rückenlehne (1) aufweist, die in Einsatzstellung einerseits getrennt auf die Sitzfläche (40) und andererseits gleichzeitig mit einer zweiten Rückenlehne (2) auf den Boden hinter der Sitzfläche (40) in vertikaler Stellung umklappbar ist.

**Claims**

1) Foldable seat, and in particular the rear seat of a motor vehicle, comprising a cushion (10) and two side-by-side backrests (1,2), each provided with means (32,34) for locking in an upright position for use, characterized in that the two backrests (1,2) are supported by a common horizontal rod (16) which can be pivoted about an X-X axis between an upright position for use of the seat and a folded position of the two backrests (1,2) and on which one of the backrests (1) is pivotally mounted.

2) Seat according to claim 1, characterized in that the pivoting backrest (2) is free to pivot on the horizontal rod (16) placed in an upright position, for the purpose of its folding onto the cushion, interlocking means (36) preventing its pivoting on said rod in the folded position.

3) Seat according to one of claims 1 and 2, characterized in that each of the backrests comprises a rectangular frame structure (1,2) through the two opposed sides (3-5, 4-6) of which the horizontal pivoting rod (16) passes successively.

4) Seat according to claim 3, characterized in that the lower bar (26) of the second backrest (2) is integral with an element (small rod 28) rotatable about the X-X pivot axis of the horizontal rod (16).

5) Seat according to one of the previous claims, characterized in that the horizontal rod (16) is connected by an articulated link (18) to a fixed support (20).

6) Seat according to one of the previous claims, characterized in that it comprises interlocking means (36) of the two backrests (1 and 2) during their pivoting about the X-X pivot axis of the rod (16).

7) Seat according to claim 6, characterized in that the interlocking means (36) of the two backrests is constituted by a tab (36) which comes to bear against the pivoting backrest (1) and is fixed to one of the sides of the second backrest (2).

8) Seat according to one of the previous claims, characterized in that it comprises a cushion (40) which can be folded vertically about its front edge and a first backrest (1) which can be folded alone onto the cushion (40) in to the position for use, and which can be folded simultaneously with a second backrest (2) onto the floor, behind the cushion (40) which is in a vertical position.

FIG.1

FIG. 2

FIG. 4

FIG. 3

EP 0 336 819 B1

FIG.5

FIG.6

FIG.7